# EUROPÄISCHE PATENTANMELDUNG

(11) **EP 2 278 197 A2**
(43) Veröffentlichungstag der Anmeldung: **26.01.2011**
(21) Anmeldenummer: 10168286.2
(22) Anmeldetag: 02.07.2010
(51) Int. Cl.: F16J 15/32

(54) **Dichtungsvorrichtung zur Abdichtung von zueinander beweglichen Maschinenteilen**

(30) Priorität: 24.07.2009 DE 102009034692
(71) Anmelder: Pierburg GmbH, 41460 Neuss (DE)
(72) Erfinder: Simons, Norbert, 40233, Düsseldorf (DE)
(74) Vertreter: Patentanwälte ter Smitten

(57) **Zusammenfassung**

Dichtungsvorrichtung (1) zur Abdichtung von zueinander beweglichen Maschinenteilen, insbesondere einer Weite gegenüber einem Gehäuseteil, bestehend aus einem Dichtungsorgan (4), das mindestens eine Abdichtebene (5) aufweist, in der das Dichtungsorgan abdichtet, und einem Sicherungsorgan (2), wobei das Sicherungsorgan zur axialen und/oder radialen Sicherung der Dichtungsvorrichtung vorgesehen ist, wobei das Sicherungsorgan in dem Dichtungsorgan integriert ist, wobei das Dichtungsorgan aus einem Elastomer hergestellt ist und das Sicherungsorgan aus Halteorganen besteht, die sich im Wesentlichen radial nach außen oder innen erstrecken, wobei die Abdichtebene/n in einer anderen Ebene angeordnet ist/sind als die Ebene von der aus sich die Halteorgane erstrecken.

## Beschreibung

### Dichtungsvorrichtung zur Abdichtung von zueinander beweglichen Maschinenteilen

Die Erfindung betrifft eine Dichtungsvorrichtung zur Abdichtung von zueinander beweglichen Maschinenteilen, insbesondere einer Welle gegenüber einem Gehäuseteil bestehend aus einem Dichtungsorgan, das mindestens eine Abdichtebene aufweist, in der das Dichtungsorgan abdichtet, und einem Sicherungsorgan, wobei das Sicherungsorgan zur axialen und/oder radialen Sicherung der Dichtungsvorrichtung vorgesehen ist.

Derartige Dichtungsvorrichtungen sind aus dem Stand der Technik hinlänglich bekannt. Sie bestehen im Wesentlichen aus einer separaten Dichtung und einem separaten Sicherungsorgan, das den Dichtring gegen Verdrehen und/oder Rausfallen, also ein axiales Verschieben sichern soll. Es sollte deutlich sein, dass die Montage und das Handling dieser beiden separaten Bauteile montage- und damit kostenaufwendig sind.

Es ist daher Aufgabe der Erfindung, eine Dichtungsvorrichtung bereit zu stellen, die die vorgenannten Nachteile vermeidet und mit einer möglichst geringen Bauteileanzahl auf kostengünstige Weise einsetzbar ist.

Diese Aufgabe wird erfindungsgemäß dadurch gelöst, dass das Sicherungsorgan in dem Dichtungsorgan integriert ist, wobei das Dichtungsorgan aus einem Elastomer hergestellt ist und das Sicherungsorgan aus Halteorganen besteht, die sich im Wesentlichen radial nach außen oder innen erstrecken, wobei die Abdichtebene/n in einer anderen Ebene angeordnet ist/sind als die Ebene von der aus sich die Halteorgane erstrecken. Eine derartige Dichtungsvorrichtung gewährleistet eine besonders einfache und damit kostengünstige Montage des Dichtungsorgans, wobei das Dichtungsorgan ohne zusätzliches Bauteil in einer gewünschten Position gesichert ist.

In besonders vorteilhafter Weise ist das Sicherungsorgan ring- beziehungsweise kreisförmig. Dabei können die im Wesentlichen radial vorstehenden Halteorgane als Stege ausgeführt sein.

Dadurch, dass die Halteorgane federnd ausgeführt sind, ist eine besonders einfache Montage der Dichtungsvorrichtung möglich. Auch ist es möglich, die Halteorgane in axialer und/oder in radialer Richtung anzuwinkeln, wodurch eine hohe Positionssicherheit bei leichter Montage gewährleistet ist.

Dabei ist es auch denkbar, dass das Sicherungsorgan hinsichtlich einer einfachen Herstellbarkeit aus Federstahl hergestellt ist.

Des Weiteren wird eine Klappenvorrichtung mit einem Gehäuse beansprucht, in dem eine Klappe über eine Welle drehbar gelagert ist, wobei die Welle gegenüber dem Gehäuse durch eine erfindungsgemäße Dichtungsvorrichtung abgedichtet ist. Um hierbei noch eine formschlüssige Sicherung der Dichtungsvorrichtung vorzusehen, kann in einem der abzudichtenden Maschinenteile eine Nut vorgesehen sein.

Ausführungsformen der Erfindung werden nachfolgend anhand der Zeichnung näher beschrieben, hierin zeigen:
Figur 1 eine Draufsicht im Schnitt einer ersten Ausführungsform einer erfindungsgemäßen Dichtungsvorrichtung,
Figur 2 eine Draufsicht einer zweiten Ausführungsform einer erfindungsgemäßen Dichtungsvorrichtung, und
Figur 3 eine schematische Schnittdarstellung einer Klappenvorrichtung mit der erfindungsgemäßen Dichtungsvorrichtung aus Figur 2.

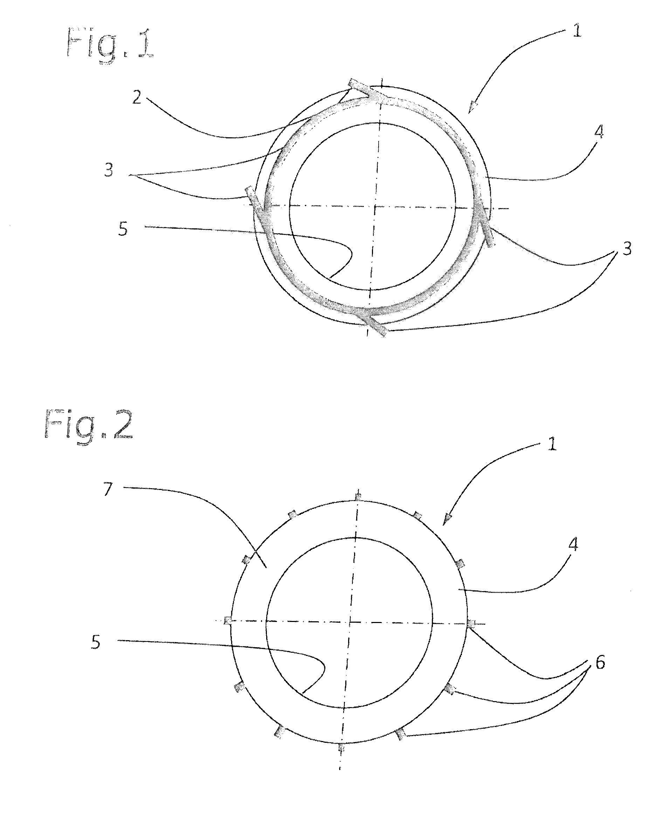

Figur 1 zeigt eine erste Ausführungsform einer geschnittenen Dichtungsvorrichtung 1 in einer Draufsicht. Diese Dichtungsvorrichtung 1 aus einem Sicherungsorgan 2, der im vorliegenden Beispiel aus Federstahl hergestellt ist, und der vier als Stege 3 ausgeführte Halteorgane aufweist. Diese Halteorgane 3 weisen in einem Winkel von ca. 30° nach außen. Das Sicherungsorgan 2 ist im vorliegenden Ausführungsbeispiel auf bekannte Weise mit einem Elastomer umspritzt, so dass ein Dichtungsorgan 4 ausgebildet ist. Im vorliegenden Ausführungsbeispiel kann sowohl die nach innen gerichtete Seite 5 des Dichtungsorgans 4 als Abdichtebene genutzt werden, wie auch die In dieser Ansicht nicht dargestellten, sich in axialer Richtung erstreckenden Ober- und Unterflächen des Dichtungsorgans 4. Es sollte deutlich sein, dass eine derartig ausgeführte Dichtungsvorrichtung 1 durch die in Tangentialrichtung angewinkelten Stege 3 insbesondere gegen ein Verdrehen durch eine rotatorische Bewegung geschützt ist, da sich die Stege bei einem aufzubringenden Drehmoment im anschließenden Maschinenteil verbeißen beziehungsweise verkrallen.

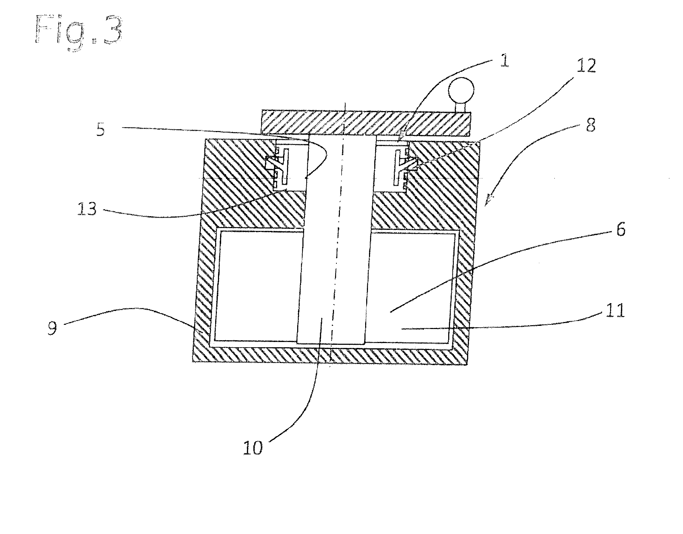

Figur 2 zeigt nun eine zweite Ausführungsform der erfindungsgemäßen Dichtungsvorrichtung 1 in einer Draufsicht. Diese Dichtungsvorrichtung weist ebenfalls ein aus Federstahl hergestelltes Sicherungsorgan auf, das durch ein Elastomer auf bekannte Weise umspritzt ist und im vorliegenden Ausführungsbeispiel 2 ebenfalls als Stege 6 ausgebildete Halteorgane aufweist. Im vorliegenden Ausführungsbeispiel sind die Stege jedoch nicht tangential angewinkelt, sondern wie in Figur 3 dargestellt, in axialer Richtung angewinkelt. Deutlich zu erkennen ist hier auch die Dichtebene 7, die in axialer Richtung wirken kann.

Figur 3 zeigt nun schematisch eine Klappenvorrichtung mit einem Gehäuse 9, in dem eine Welle 10 gelagert ist, wobei auf der Welle 10 eine Klappe 11, beispielsweise eine Bypassklappe, angeordnet ist. Um die Welle 10 gegenüber dem Gehäuse 9 abzudichten, ist im vorliegenden Ausführungsbeispiel eine Dichtungsvorrichtung 1 gemäß Figur 2 vorgesehen. Deutlich zu erkennen ist in dieser Ansicht die angewinkelte Position der Stege 4 in axialer Richtung. Des Weiteren weist das Gehäuse 9 eine Nut 12 auf, in die die Stege 6 formschlüssig ergreifen können. Die Dichtungsvorrichtung ist somit sowohl form- als auch kraftschlüssig gesichert. Als Dichtebenen wirken im vorliegenden Ausführungsbeispiel die Ebenen 12 und 13.

## Patentansprüche

1. Dichtungsvorrichtung zur Abdichtung von zueinander beweglichen Maschinenteilen, insbesondere einer Welle gegenüber einem Gehäuseteil, bestehend aus einem Dichtungsorgan, das mindestens eine Abdichtebene aufweist, in der das Dichtungsorgan abdichtet, und einem Sicherungsorgan, wobei das Sicherungsorgan zur axialen und/oder radialen Sicherung der Dichtungsvorrichtung vorgesehen ist,
**dadurch gekennzeichnet, dass**
das Sicherungsorgan in dem Dichtungsorgan integriert ist, wobei das Dichtungsorgan aus einem Elastomer hergestellt ist und das Sicherungsorgan aus Halteorganen besteht, die sich im Wesentlichen radial nach außen oder innen erstrecken, wobei die Abdichtebene/n in einer anderen Ebene angeordnet ist/sind als die Ebene von der aus sich die Halteorgane erstrecken.

2. Dichtungsvorrichtung nach Anspruch 1, **dadurch gekennzeichnet, dass** das Sicherungsorgan ring- bzw. kreisförmig ist.

3. Dichtungsvorrichtung nach Anspruch 1 oder 2, **dadurch gekennzeichnet, dass** die Halteorgane als Stege ausgeführt sind.

4. Dichtungsvorrichtung nach Anspruch 1 - 3, **dadurch gekennzeichnet, dass** die Halteorgane federnd ausgeführt sind.

5. Dichtungsvorrichtung nach einem der vorhergehenden Ansprüche, **dadurch gekennzeichnet, dass** die Halteorgane in axialer und/oder in radialer Richtung angewinkelt sind.

6. Dichtungsvorrichtung nach einem der vorhergehenden Ansprüche, **dadurch gekennzeichnet, dass** das Sicherungsorgan aus Federstahl hergestellt ist.

7. Klappenvorrichtung mit einem Gehäuse in dem eine Klappe über eine Welle drehbar gelagert ist, wobei die Welle gegenüber dem Gehäuse durch eine Dichtungsvorrichtung nach einem der Ansprüche 1 - 6 abgedichtet ist.

8. Klappenvorrichtung nach Anspruch 7, **dadurch gekennzeichnet, dass** im Gehäuse oder der Welle eine Nut vorgesehen ist.
